# EUROPEAN PATENT APPLICATION

(11) **EP 4 826 785 A1**
(43) Date of publication of application: **21.10.2026**
(21) Application number: 25886369.5
(22) Date of filing: 16.07.2025
(51) Int. Cl.: H01M 4/36, H01M 4/505, H01M 4/525, H01M 4/131, H01M 10/054, C01G 53/50, H01M 4/02

(54) **CATHODE ACTIVE MATERIAL FOR SODIUM SECONDARY BATTERY, PREPARATION METHOD THEREFOR, AND SODIUM SECONDARY BATTERY COMPRISING SAME**

(30) Priority: 31.10.2024 KR 20240151930
(71) Applicant: ECOPRO BM CO., LTD., Cheongju-si, Chungcheongbuk-do 28116 (KR)
(72) Inventor: JEON, Yejin, Cheongju-si Chungcheongbuk-do 28116 (KR); PARK, A Ram, Cheongju-si Chungcheongbuk-do 28116 (KR); LEE, Myeong Joo, Cheongju-si Chungcheongbuk-do 28116 (KR); LEE, Dongwook, Cheongju-si Chungcheongbuk-do 28116 (KR)
(74) Representative: Beck & Rössig European Patent Attorneys
(86) International application number: PCT/KR2025/010477
(87) International publication number: WO 2026/095261

(57) **Abstract**

One embodiment of the present invention provides a positive electrode active material for a sodium secondary battery, comprising a sodium composite transition metal oxide including at least sodium, nickel, manganese, M1, and doping metals, wherein M1 is iron or cobalt, wherein the doping metals consist of calcium and copper, and wherein the positive electrode active material satisfies Relation Formula 1A.

## Description

### [Technical Field]

The present invention relates to a positive electrode active material for a sodium secondary battery, a method for preparing the same, and a sodium secondary battery including the same.

### [Background Art]

Secondary batteries have been widely used as energy storage devices in various electronic technology fields. Recently, as demand for lithium-ion secondary batteries has rapidly increased, sodium-ion secondary batteries have attracted attention as alternatives to lithium, which is an expensive metal.

Sodium-ion secondary batteries are one of the next-generation materials having high potential for application to secondary batteries because they have an operating principle of an intercalation/deintercalation reaction similar to that of lithium-ion secondary batteries. However, since sodium-ion secondary batteries exhibit low performance in terms of capacity, cycle-life characteristics, rate capability, and the like compared with lithium-ion secondary batteries and thus have difficulty in commercialization, development of a positive electrode active material having high performance is essential for commercialization of sodium-ion secondary batteries.

As positive electrode active materials for sodium-ion secondary batteries, layered transition metal oxides having a simple structure, excellent electrochemical performance, and easy synthesis are typically used. Layered transition metal oxides are typically divided into O3-type and P2-type according to crystal structure, wherein a positive electrode active material based on an O3-type structure exhibits a composition such as Naₓ(TM)O₂ (2/3 < x ≤ 1), and a positive electrode active material based on a P2-type structure has a composition of Naₓ(TM)O₂ (x ≤ 2/3).

P2-type layered oxides exhibit relatively excellent cycle stability, but have difficulty in commercial application due to disadvantages such as relatively deteriorated capacity characteristics resulting from a low sodium content. O3-type layered oxides exhibit higher energy density than P2-type layered oxide particles, but have a disadvantage of inferior cycle stability because greater structural changes occur during charge and discharge. Specifically, O3-type layered oxides have poor air stability and water stability, and thus react with surrounding H2O and CO2 during storage and processing to form sodium by-products existing in the form of Na2CO3 and NaOH on particle surfaces, thereby causing structural deterioration.

As one of various methods of doping a positive electrode active material for improving properties, a method of introducing monovalent and multivalent cations as doping elements has been studied. By being positioned within a lattice of the positive electrode active material, the doping elements may provide an effect of improving physical and electrochemical properties of the positive electrode active material according to intrinsic characteristics of the respective doping elements, such as bonding energy and oxidation state.

Such doping elements may be selected from various elements according to desired effects and adjusted to optimal contents for use. Since doping effects of the doping elements may vary depending on various internal and external environments, such as size, diffusivity, and the preparation environment of the positive electrode active material, composite doping using a combination of a plurality of elements may be more advantageous for improving properties of the positive electrode active material than single doping in which one element is substituted, in consideration of these variables. Specifically, composite doping has an advantage in that it may selectively and in combination provide various effects that may be provided by the respective doping elements, such as structural stability, thermal stability, changes in cation mixing, and changes in capacity of the positive electrode active material.

However, even in such composite doping, in addition to effects that may be provided by the doping elements, characteristics of sodium and transition metal elements in the positive electrode active material into which the doping elements are introduced and correlations among the doping elements must be considered. If composite doping elements are configured without such consideration, doping efficiency may decrease, or a problem of deteriorating properties of the positive electrode active material may instead occur. Therefore, there is a strong need for a technology capable of optimizing the composition and content of doping elements for more efficient improvement of properties of the positive electrode active material.

In the present invention, it is intended to develop a composite doping technology capable of optimizing the composition and content of doping elements to improve structural stability of an O3-type positive electrode active material and achieve high capacity and excellent cycle-life characteristics.

### [Disclosure of Invention]

### [Technical Problem]

In the present invention, it is intended to improve structural stability of an O3-type positive electrode active material through dual doping to achieve high capacity and excellent cycle-life characteristics.

In addition, an object of the present invention is to improve the above-described problems in which, when copper is used as a doping metal, physical agglomeration occurs or impurity phases such as NiO are formed by chemical reactions, by applying dual doping of copper and calcium and a specific preparation method to uniformly distribute the doping metals on the surfaces and in the interiors of positive electrode active material particles.

In addition, in the present invention, it is intended to provide a positive electrode active material in which electrolyte side reactions are reduced by increasing average particle diameters of primary particles and secondary particles of the positive electrode active material and reducing a specific surface area through dual doping of calcium and copper.

### [Technical Solution]

One embodiment of the present invention provides a positive electrode active material for a sodium secondary battery, comprising a sodium composite transition metal oxide including at least sodium, nickel, manganese, M1, and doping metals, wherein M1 is iron or cobalt, wherein the doping metals consist of calcium and copper, and wherein the positive electrode active material satisfies the following Relation Formula 1A: [Relation Formula 1A] $80 \leq A 1 \left(Cu\right) / At \left(%\right) \leq 99$

In Relation Formula 1A, At is the total cross-sectional area of particles of the sodium composite transition metal oxide, and A1(Cu) is an area, among the total cross-sectional area, in which copper is within ±10% of the average content (Cu, average at mol%) based on 100 at mol% of total metals excluding sodium and calcium.

The positive electrode active material may satisfy the following Relation Formula 1B: [Relation Formula 1B] $80 \leq B 1 \left(Cu\right) / Bt \left(%\right) \leq 99$

In Relation Formula 1B, Bt is the total surface area of particles of the sodium composite transition metal oxide, and B1(Cu) is an area, among the total surface area, in which copper is within ±10% of the average content (Cu, average at mol%) based on 100 at mol% of total metals excluding sodium and calcium.

The positive electrode active material may satisfy the following Relation Formula 2A: [Relation Formula 2A] $80 \leq A 2 \left(Ca\right) / At \left(%\right) \leq 99$

In Relation Formula 2A, At is the total cross-sectional area of particles of the sodium composite transition metal oxide, and A2(Ca) is an area, among the total cross-sectional area, in which calcium is within ±10% of the average content (Ca, average at mol%) based on 100 at mol% of the total amount of sodium and calcium.

The positive electrode active material may satisfy the following Relation Formula 2B: [Relation Formula 2B] $80 \leq B 2 \left(Ca\right) / Bt \left(%\right) \leq 99$

In Relation Formula 2B, Bt is the total surface area of particles of the sodium composite transition metal oxide, and B2(Ca) is an area, among the total surface area, in which calcium is within ±10% of the average content (Ca, average at mol%) based on 100 at mol% of the total amount of sodium and calcium.

The sodium composite transition metal oxide may include the doping metals such that a molar ratio (Cu/Ca) of copper to calcium is from 1.5 to 4.5.

The sodium composite transition metal oxide may include copper in an amount greater than 3 at mol% and less than 10 at mol% based on 100 at mol% of total metals excluding sodium and calcium, and calcium in an amount greater than 0.5 at mol% and less than 3 at mol% based on 100 at mol% of a total amount of sodium and calcium.

The sodium composite transition metal oxide may include a compound represented by Chemical Formula 1-1.

[Chemical Formula 1-1] Naₐ₋₂ᵥCaᵥ[(NiₓMn_{y}M1_{z}Cu_{w})]O₂

In Chemical Formula 1-1, M1 is Co or Fe, 0.8<a<1.2, 0.005<v<0.03, 0.1≤x≤0.9, 0.1≤y≤0.9, 0.1≤z≤0.9, 0.03<w<0.1, and x+y+z+w=1.

The sodium composite transition metal oxide may include a compound represented by Chemical Formula 1-2.

[Chemical Formula 1-2] Naₐ₋₂ᵥCaᵥ[(NiₓMn_{y}M1_{z}Cu_{w})]O₂

In Chemical Formula 1-2, M1 is Fe, 0.9<a<1.1, 0.01<v<0.02, 0.27≤x≤0.37, 0.27≤y≤0.37, 0.27≤z≤0.37, 0.04<w<0.06, and x+y+z+w=1.

The sodium composite transition metal oxide may be one in which the calcium is substituted into a sodium layer of the composite transition metal oxide, and the copper is substituted into a transition metal layer of the composite transition metal oxide.

The sodium composite transition metal oxide may have an O3 crystal structure in X-ray diffraction analysis, a full width at half maximum (FWHM) of a (003) peak located at 2θ=15 to 17.5° may be 0.1699 to 0.2599, and an NiO peak may not substantially appear.

Another embodiment of the present invention provides a method for preparing a positive electrode active material for a sodium secondary battery, the method comprising: a coating process of mixing a composite transition metal hydroxide precursor including at least nickel, manganese, and M1 (Co and/or Fe) with a copper compound and performing a first heat treatment to coat at least a portion of a surface of particles of the composite transition metal hydroxide precursor with copper; and a doping process of mixing the copper-coated transition metal hydroxide precursor with a calcium compound and a sodium compound and performing a second heat treatment to substitute surfaces and interiors of particles of a sodium composite transition metal oxide with copper and calcium.

In the coating process (1) and the doping process (2), a ratio (T2/T1) of heat treatment temperatures (°C) may be from 1.2 to 2, and a ratio (H2/H1) of heat treatment times (h) may be from 1.5 to 2.5.

In the coating process and the doping process, the copper compound and the calcium compound may be mixed such that a molar ratio (Cu/Ca) of copper to calcium is from 1.5 to 4.

The coating process (1) and the doping process (2) may be performed such that the composite transition metal hydroxide precursor and the sodium composite transition metal oxide are each secondary particles in which at least one primary particle is aggregated, and a ratio (D/C) of an average particle diameter (D50) of secondary particles (D) of the sodium composite transition metal oxide to an average particle diameter (D50) of secondary particles (C) of the composite transition metal hydroxide precursor is from 1.2 to 2.

Another embodiment of the present invention provides a positive electrode for a sodium secondary battery, comprising the positive electrode active material described above.

Another embodiment of the present invention provides a sodium secondary battery comprising a positive electrode and a negative electrode.

### [Advantageous Effects]

In the case of the calcium- and copper-dual-doped O3-type positive electrode active material of the present invention, there is an effect of achieving high capacity and excellent cycle-life characteristics by improving structural stability.

After dual doping, compared with single doping, an effect of improving cycle life is expected due to an increase in the size of primary particles of the positive electrode active material, a reduction in the specific surface area of secondary particles of the positive electrode active material, a reduction in the area reacting with an electrolyte solution, and a reduction in electrolyte side reactions.

In addition, by selecting copper and calcium as dual doping metals and applying a specific preparation method to uniformly distribute the dual doping metals on the surfaces and in the interiors of positive electrode active material particles, structural stability and moisture stability of the positive electrode active material may be improved. In particular, copper is uniformly distributed on the surfaces and in the interiors of the particles, which is analyzed to be more advantageous in terms of cycle-life characteristics.

### [Brief Description of Drawings]

FIG. 1 shows results of surface SEM-EDS (Scanning Electron Microscopy and Energy Dispersive X-ray Spectroscopy) mapping analysis of precursor particles having copper coated on surfaces thereof, prepared in Example 1.
FIGS. 2 and 3 show results of SEM-EDS (Scanning Electron Microscopy and Energy Dispersive X-ray Spectroscopy) mapping analysis of cross-sections (FIG. 2) and surfaces (FIG. 3) of positive electrode active material particles prepared in Example 1 and Comparative Examples 2 and 4.
FIGS. 4 and 5 are SEM images of primary particles (FIG. 4) and SEM images of secondary particles (FIG. 5) of positive electrode active materials prepared in Example 1 and Comparative Examples 1 to 3.
FIG. 6 shows XRD analysis results of positive electrode active materials prepared in Example 1 and Comparative Examples 1 to 4.
FIG. 7 shows SEAD (Selected Area Electron Diffraction) analysis results of positive electrode active materials prepared in Example 1 and Comparative Example 2.

### [Mode for Carrying Out the Invention]

The advantages and features of the present invention, and methods for achieving the same, will become apparent with reference to embodiments described below in detail in conjunction with the accompanying drawings. However, the present invention is not limited to the embodiments disclosed hereinafter and will be embodied in various different forms. These embodiments are merely provided so that this disclosure will be thorough and complete, and will fully convey the scope of the invention to those skilled in the art. The present invention is defined only by the scope of the appended claims.

Unless otherwise defined, all terms (including technical and scientific terms) used in the present specification may be used in meanings commonly understood by those skilled in the art to which the present invention pertains.

Throughout the specification, when a part is referred to as "including" a component, this means that the part does not exclude other components and may further include other components, unless specifically stated to the contrary.

In the present specification, singular forms include plural forms unless the context clearly indicates otherwise.

As used herein, the expression "A to B" means "A or more and B or less" unless otherwise specifically defined. In addition, the expression "A and/or B" means at least one selected from the group consisting of A and B unless otherwise specifically defined.

Further, when a part such as a layer, film, region, or plate is referred to as being "on" or "over" another part, this includes not only a case where the part is directly on the other part, but also a case where another part is interposed therebetween.

One embodiment of the present invention provides a positive electrode active material for a sodium secondary battery, characterized in that the positive electrode active material comprises a sodium composite transition metal oxide including at least sodium, nickel, manganese, M1, and doping metals, wherein M1 is iron or cobalt, and wherein the doping metals consist of calcium and copper.

Through calcium-copper dual doping, structural stability of an O3-type positive electrode active material may be improved, and high capacity and excellent cycle-life characteristics may be achieved.

The positive electrode active material is characterized by satisfying the following Relation Formula 1A. [Relation Formula 1A] $80 \leq A 1 \left(Cu\right) / At \left(%\right) \leq 99$

In Relation Formula 1A, At is the total cross-sectional area of particles of the sodium composite transition metal oxide, and A1(Cu) is an area, among the total cross-sectional area, in which copper is within ±10% of the average content (Cu, average at mol%) based on 100 at mol% of total metals excluding sodium and calcium.

Specifically, At may be calculated as the sum of the selected cross-sectional regions after arbitrarily selecting five circular regions on a particle cross-section so as not to overlap, each circular region having a diameter corresponding to 1/8 of a particle diameter. A1(Cu) refers to a region, among the selected total cross-sectional area (At), in which copper is within ±10% of the average content based on 100 at mol% of total metals excluding sodium and calcium. For example, when the average copper content of the positive electrode active material is 5 at mol% (among total metals excluding sodium and calcium), A1(Cu) refers to the area of a region within At in which the copper content is from 4.5 to 5.5 at mol%. Analysis of the copper content may be experimentally performed using Energy Dispersive X-ray Spectroscopy (EDS) provided in a transmission electron microscope, a scanning electron microscope, or the like.

Also, A1(Cu)/At (%) may be 80% or more, 85% or more, 90% or more, or 95% or more, and may be 99% or less. When A1(Cu)/At (%) falls within the design range of Relation Formula 1A, it may indicate that Cu diffuses into the interiors of the positive electrode active material particles and is uniformly distributed therein.

As in one embodiment, the positive electrode active material may satisfy the following Relation Formula 1B. [Relation Formula 1B] $80 \leq B 1 \left(Cu\right) / Bt \left(%\right) \leq 99$

In Relation Formula 1B, Bt is the total surface area of particles of the sodium composite transition metal oxide, and B1(Cu) is an area, among the total surface area, in which copper is within ±10% of the average content (Cu, average at mol%) based on 100 at mol% of total metals excluding sodium and calcium.

Specifically, Bt may be calculated as the sum of the selected cross-sectional regions after arbitrarily selecting five circular regions on particle surfaces so as not to overlap, each circular region having a diameter corresponding to 1/8 of a particle diameter. B1(Cu) refers to a region, among the selected total cross-sectional area (Bt), in which copper is within ±10% of the average content based on 100 at mol% of total metals excluding sodium and calcium. For example, when the average copper content of the positive electrode active material is 5 at mol% (among total metals excluding sodium and calcium), B1(Cu) refers to the area of a region within Bt in which the copper content is from 4.5 to 5.5 at mol%.

Also, B1(Cu)/At (%) may be 80% or more, 85% or more, 90% or more, or 95% or more, and may be 99% or less. When B1(Cu)/At (%) falls within the design range of Relation Formula 1B, it may indicate that Cu is uniformly distributed on the surfaces of the positive electrode active material particles. When the B1/Bt ratio is less than the lower limit, there is a problem in that copper doped on the surfaces of the positive electrode active material particles is physically agglomerated in some regions or forms impurity phases through chemical reactions.

In the present invention, two heat treatments are performed during preparation of the positive electrode active material, wherein i) copper is first uniformly coated on the surfaces of the transition metal hydroxide precursor through an initial heat treatment, and ii) sodium may subsequently be inserted (sodiation) by performing a second heat treatment, and copper may be uniformly diffused into the particle surfaces and interiors. In addition, iii) by growing the primary particles through copper and calcium dual doping, the surfaces and pores of the primary particles may be reduced. Due to these particle characteristics, physical agglomeration of copper diffused into the interiors and surfaces may be suppressed, and distribution uniformity may be improved.

According to the present invention, structural stability may be improved through calcium and copper dual doping, and there is an effect of suppressing electrolyte side reactions by increasing the sizes of positive electrode active material particles (primary particles and secondary particles) and reducing the specific surface area in contact with an electrolyte solution.

As in one embodiment, the positive electrode active material may be characterized in that it further satisfies the following Relation Formula 2A and/or Relation Formula 2B. [Relation Formula 2A] $80 \leq A 2 \left(Ca\right) / At \left(%\right) \leq 99$

In Relation Formula 2A, At is the total cross-sectional area of particles of the sodium composite transition metal oxide, and A2 is an area, among the total cross-sectional area, in which calcium is within ±10% of an average molar concentration Ca(x) based on 100 at mol% of the total amount of sodium and calcium. [Relation Formula 2B] $80 \leq B 2 \left(Ca\right) / Bt \left(%\right) \leq 99$

In Relation Formula 2B, Bt is the total surface area of the sodium composite transition metal oxide particles, and B2 is an area, among the total surface area, in which calcium is within ±10% of an average molar concentration Ca(x) based on 100 at mol% of the total amount of sodium and calcium.

In Relation Formulas 2A and 2B, 85 ≤ A2/At (%) ≤ 99, 90 ≤ A2/At (%) ≤ 99, or 95 ≤ A2/At (%) ≤ 99 may be satisfied, and 85 ≤ B2/Bt (%) ≤ 99, 90 ≤ B2/Bt (%) ≤ 99, or 95 ≤ B2/Bt (%) ≤ 99 may be satisfied.

When the A2/At ratio or the B2/Bt ratio is less than the lower limit, there is a problem in that calcium doped throughout the interiors and surfaces of the positive electrode active material particles is physically agglomerated or forms impurity phases through chemical reactions.

Meanwhile, as described above, the area ratios (A1/At, A2/At, B1/Bt, and B2/Bt) of Relation Formulas 1A, 1B, 2A, and 2B may represent distribution uniformity (dispersion degree) of copper and calcium doped into the interiors and surfaces of the sodium composite transition metal oxide particles. Copper, when singly substituted, is agglomerated on the particle surfaces and interiors at or above a certain doping amount and exhibits a non-uniform distribution, and may form side-reaction phases. Calcium, when singly substituted, tends to be relatively uniformly doped. When copper and calcium are dual-doped, there is an effect of improving distribution uniformity of the two dopants.

As in one embodiment, the sodium composite transition metal oxide may include the doping metals such that a molar ratio (Cu/Ca) of copper to calcium is from 1.5 to 4.5, and, for example, may include the doping metals such that the molar ratio is from 1.5 to 4.5, from 2 to 4.5, from 2.5 to 4, from 3 to 4, or from 3 to 3.5. When the Cu/Ca molar ratio is excessively low below the lower limit, the effects of improving structural stability and cycle-life characteristics by copper doping are not sufficiently exhibited, or capacity characteristics may deteriorate due to excessive calcium doping. Conversely, when the Cu/Ca molar ratio exceeds the upper limit, the effect of improving distribution uniformity of copper by calcium becomes insufficient, such that the doped copper is physically agglomerated or readily forms impurity phases through chemical reactions.

Specifically, the sodium composite transition metal oxide may include a copper dopant in an amount greater than 3 at mol% and less than 10 at mol% based on 100 at mol% of total metals excluding sodium and calcium, and, for example, may include the copper dopant in an amount of 3 to 8 at mol%, 3 to 7 at mol%, 3.5 to 6.5 at mol%, or 4 to 6 at mol%. When the copper doping amount is less than the lower limit, improvement in structural stability and enhancement of cycle-life characteristics by copper doping are insufficient. Conversely, when the copper doping amount exceeds the upper limit, problems such as physical agglomeration of the doped copper and formation of chemical impurity phases may occur.

Specifically, the sodium composite transition metal oxide may include a calcium dopant in an amount greater than 0.5 at mol% and less than 3 at mol% based on 100 at mol% of the total amount of sodium and calcium, and may include the calcium dopant in an amount of 0.5 to 2.5 at mol%, 0.5 to 2 at mol%, or 1 to 2 at mol%. When the calcium doping amount is less than the lower limit, the effect of improving distribution uniformity of copper by calcium is insufficient, and the effect of improving structural stability by calcium doping may be insignificant. Conversely, when the calcium doping amount exceeds the upper limit, sodium ions may become deficient due to excessive calcium doping, and thus capacity characteristics and rate capability may deteriorate.

As in one embodiment, the sodium composite transition metal oxide may include a compound represented by Chemical Formula 1-1.

[Chemical Formula 1-1] Naₐ₋₂ᵥCaᵥ[(NiₓMn_{y}M1_{z}Cu_{w})]O₂

In Chemical Formula 1-1, M1 is Co or Fe, 0.8<a<1.2, 0.005<v<0.03, 0.1≤x≤0.9, 0.1≤y≤0.9, 0.1≤z≤0.9, 0.03<w<0.1, and x+y+z+w=1.

A molar ratio (Na/M) of sodium (Na) to total metals (M) excluding sodium may be greater than 0.8 and less than 1.2, such that the composite particles may be formed to have an O3 crystal structure. In Chemical Formula 1, when the content of Na corresponding to a is 0.8 or less, capacity may decrease. Conversely, when the content of Na corresponding to a is 1.2 or greater, air stability and moisture stability become more sensitive to synthesis conditions, such as temperature and atmosphere, and structural stability and moisture stability may deteriorate.

The transition metals in the composite particles may be included in amounts of 0.1 mol to 0.9 mol each of Ni, Fe or Co, and Mn per 1 mol of the composite particle oxide, and may, for example, be included in a Ni_{1/3}Fe_{1/3}Mn_{1/3} composition. When iron is included in the composite particles, Fe³⁺ may be oxidized to Fe⁴⁺ at a high voltage, and thus the crystal structure may become unstable. However, as in the present invention, the crystal structure may be stabilized by substituting Ca into the sodium layer and substituting Cu into the transition metal layer.

The calcium and copper, which are the doping metals, are as described above.

Specifically, the sodium composite transition metal oxide may include a compound represented by Chemical Formula 1-2.

[Chemical Formula 1-2] Naₐ₋₂ᵥCaᵥ[(NiₓMn_{y}M1_{z}Cu_{w})]O₂

In Chemical Formula 1-2, M1 is Fe, 0.9<a<1.1, 0.01<v<0.02, 0.27≤x≤0.37, 0.27≤y≤0.37, 0.27≤z≤0.37, 0.04<w<0.06, and x+y+z+w=1.

According to the composition of the sodium composite transition metal oxide, in a multi-component system in which Cu and Ca are substituted based on the transition metals Ni, Fe, and Mn, by adopting an optimal composition, a positive electrode material that is structurally stable and has high capacity and excellent cycle-life characteristics may be synthesized.

As in one embodiment, in the sodium composite transition metal oxide, the calcium may be substituted into the sodium layer of the composite transition metal oxide, and the copper may be substituted into the transition metal layer of the composite transition metal oxide.

Specifically, the calcium may be substantially entirely substituted into the sodium layer of the composite transition metal oxide. For example, 90 to 100 mol%, 90 to 99 mol%, or 95 to 99 mol% of the total moles of calcium may be substituted into the sodium layer. In addition, the copper may be substantially entirely substituted into the transition metal layer of the composite transition metal oxide. For example, 90 to 100 mol%, 90 to 99 mol%, or 95 to 99 mol% of the total moles of copper may be substituted into the transition metal layer.

In the present invention, i) the dual doping metals are selected such that calcium (0.99 Å) and sodium (1.02 Å) have similar ionic radii, and copper (0.73 Å) and the transition metal (Ni 0.78 Å) have similar ionic radii; ii) by first coating copper on the surfaces and interiors of the transition metal hydroxide precursor through low-temperature heat treatment and subsequently mixing calcium in the sodium insertion step, the reactivity between copper and the transition metal is increased, and copper may be uniformly diffused into the surfaces and interiors of the precursor particles; and iii) by mixing the calcium compound together with the sodium compound during sodium insertion (sodiation) and performing high-temperature heat treatment, calcium may be caused to be competitively substituted into the sodium layer together with sodium, while copper may be caused to be uniformly diffused into the interior.

As in one embodiment, the positive electrode active material has an O3 crystal structure in X-ray diffraction (XRD) analysis, and a full width at half maximum (FWHM) of the (003) peak located at 2θ=15 to 17.5° may be 0.1699 to 0.2599. As the FWHM(003) is lower, higher O3 crystallinity is exhibited, and electrochemical performance may be improved due to an increase in structural stability after Cu and Ca dual doping.

In addition, a NiO peak may not substantially appear in the XRD analysis. The proportion of NiO measured by a Rietveld refinement method based on X-ray diffraction analysis may be 3% or less, 2% or less, or 1% or less, but is not limited thereto. At the same time, a c-axis (c-lattice) length of the positive electrode active material may be greater than 16.000, 16.001 or greater, 16.002 or greater, 16.003 or greater, or 16.004 or greater, and may be 16.010 or less or 16.07 or less. According to the present invention, since Cu and Ca are dual-doped using a Cu-coated NFM precursor, together with the effect of expanding the c-axis length due to the introduction of Cu, the problem that side-reaction phases such as a NiO phase are synthesized during Na insertion when Cu is introduced alone may be improved through the introduction of Ca. In addition, as Ca and Cu are relatively uniformly doped over the entire surface and cross-section of the positive electrode active material, the above-described effects may be obtained throughout the entire positive electrode active material particle.

Another embodiment of the present invention provides a method for preparing a positive electrode active material for a sodium secondary battery.

The method comprises: a coating process of mixing a composite transition metal hydroxide precursor including at least nickel, manganese, and M1 (Co and/or Fe) with a copper compound and performing a first heat treatment to coat at least a portion of the surfaces of particles of the composite transition metal hydroxide precursor with copper; and a doping process of mixing the copper-coated transition metal hydroxide precursor, a calcium compound, and a sodium compound and performing a second heat treatment to substitute the surfaces and interiors of particles of a sodium composite transition metal oxide with copper and calcium.

According to the present invention, an O3-type positive electrode active material having high capacity and excellent cycle-life characteristics may be provided by improving structural stability through the coating process and the doping process for calcium-copper dual doping. In addition, by coating copper and doping calcium in separate steps, copper may be uniformly diffused into the interiors of the sodium composite transition metal oxide particles. In contrast, when a copper coating process is not performed and a copper compound and a calcium compound are simultaneously mixed and heat-treated in the doping process, when copper or calcium is singly doped, or when a calcium compound is mixed and subjected to the first heat treatment in the coating process and a copper compound is mixed and subjected to the second heat treatment in the doping process, doping uniformity may be deteriorated.

The coating process is intended to uniformly coat copper on at least a portion, preferably the entirety, of the surfaces of the composite transition metal hydroxide precursor particles, increase the size of the precursor primary particles, and increase the reactivity between the transition metal and copper. Accordingly, the composite transition metal hydroxide precursor and the copper compound are mixed and subjected to the first heat treatment.

As in one embodiment, the composite transition metal hydroxide and the copper compound may be mixed such that the copper content is greater than 3 at mol% and less than 10 at mol% based on 100 at mol% of total metals, and, for example, may be mixed such that the copper content is 3 to 8 at mol%, 3 to 7 at mol%, 3.5 to 6.5 at mol%, or 4 to 6 at mol%. When the amount of the copper compound is less than the lower limit, improvement in structural stability and enhancement of cycle-life characteristics by copper doping are insufficient. Conversely, when the amount exceeds the upper limit, physical agglomeration of the doped copper occurs, uniform coating may become difficult, and impurity phases may be synthesized.

As in one embodiment, the mixing may uniformly dope copper on at least a portion, preferably the entire surface, of the precursor particles by applying a dry method. In contrast, when doping is performed by a wet method, selection of the doping compound is limited, and there is a problem of increased costs due to process complexity, and thus may be undesirable.

In addition, the copper compound may be an acetate compound of copper, a sulfide of copper, a nitride of copper, a phosphide of copper, an oxide of copper, an oxyhydroxide of copper, a hydroxide of copper, or a combination thereof.

In addition, the composite transition metal hydroxide precursor includes at least nickel, manganese, and M1 (Co and/or Fe), and may include a compound represented by Relation Formula 2A:

[Chemical Formula 2-1] [(NiₓMn_{y}M1_{z})](OH)₂

wherein M1 is Co or Fe, and 0.1≤x≤0.9, 0.1≤y≤0.9, 0.1≤z≤0.9, and x+y+z=1.

Specifically, the composite transition metal hydroxide precursor may include a compound represented by Relation Formula 2B:

[Chemical Formula 2-2] [(NiₓMn_{y}M1_{z})](OH)₂

wherein M1 is Fe, and 0.27≤x≤0.37, 0.27≤y≤0.37, 0.27≤z≤0.37, and x+y+z=1.

As in one embodiment, the first heat treatment may be performed at a temperature of 500 to 700°C for 4 to 8 hours. When the heat-treatment temperature and time are within the above ranges, copper is uniformly coated over the entire surfaces of the precursor particles, and the reactivity between the transition metal and copper may be increased. In addition, the size of the precursor primary particles is increased, the pore ratio within the secondary particles and the specific surface area of the primary particles are decreased, and a highly crystalline precursor may be synthesized.

Specifically, the first heat treatment may be performed at 500 to 700°C, 550 to 650°C, or 550 to 600°C for 4 to 8 hours, 4.5 to 7.5 hours, or 5 to 7 hours, thereby further improving the above-described effects.

The doping process is intended to diffuse the copper coated on the surfaces of the precursor particles into the interiors of the particles, uniformly dope the dual doping metals on the surfaces and in the interiors of the oxide particles, substitute the dual doping metals into the crystal structure of the sodium composite transition metal oxide, and insert sodium to prepare the sodium composite transition metal oxide, and the copper-coated transition metal hydroxide precursor, the calcium compound, and the sodium compound are mixed and subjected to a second heat treatment.

As in one embodiment, the copper-coated transition metal hydroxide precursor and the calcium compound may be mixed such that the calcium content is greater than 0.5 at mol% and less than 3 at mol% based on 100 at mol% of the total amount of sodium and calcium, and, for example, may be mixed such that the calcium content is 0.5 to 2.5 at mol%, 0.5 to 2 at mol%, or 1 to 2 at mol%.

When the amount of calcium is less than the lower limit, the effect of improving the distribution uniformity of copper by calcium is insufficient, and the effect of improving structural stability by calcium doping may be insignificant. Conversely, when the amount exceeds the upper limit, sodium ions become deficient due to excessive calcium doping, and thus capacity characteristics and rate capability may deteriorate.

In addition, the sodium compound may be mixed in an equivalent amount such that Na/M, where M is the total metals excluding Na and Ca, is greater than 0.8 and less than 1.2, and, for example, may be mixed in an amount of 0.9 to 1.1 equivalents.

As in one embodiment, the mixing may uniformly mix calcium, sodium, and copper on at least a portion, preferably the entire surface, of the precursor particles by applying a dry method, whereas, when mixing is performed by a wet method, selection of the calcium compound and the sodium compound is limited, and there is a problem of increased costs due to process complexity, and thus may be undesirable.

As in one embodiment, the calcium compound may be an acetate compound, sulfide, nitride, phosphide, oxide, oxyhydroxide, or hydroxide of calcium, or a combination thereof.

In addition, the sodium compound may be at least one selected from the group consisting of Na2CO3, NaOH, NaNO3, CH3COONa, and Na₂(COO)2, and preferably may be Na2CO3, NaOH, or a combination thereof.

As in one embodiment, the second heat treatment may be performed at a temperature of 800°C to 1,000°C for 8 to 12 hours. When the temperature and time of the second heat treatment are within the above ranges, the sodium composite transition metal oxide may be prepared by diffusing copper into the interiors of the oxide particles, uniformly doping the dual doping metals throughout the surfaces and interiors of the oxide particles, substituting the dual doping metals into the crystal structure of the sodium composite transition metal oxide, and inserting sodium. In addition, the reaction among the raw materials may occur sufficiently, and the particles may grow uniformly.

Specifically, the second heat treatment may be performed at 800 to 1,000°C, 850 to 950°C, or 900 to 950°C for 8 to 12 hours, 8.5 to 11.5 hours, or 9 to 11 hours, thereby further improving the above-described effects.

As in one embodiment, the coating process (1) and the doping process (2) may be performed such that a ratio (T2/T1) of heat-treatment temperatures (°C) is 1.2 to 2 and a ratio (H2/H1) of heat-treatment times (h) is 1.5 to 2.5. Specifically, the coating process (1) and the doping process (2) may be performed such that the ratio (T2/T1) of heat-treatment temperatures (°C) is 1.2 to 2, 1.2 to 1.8, 1.2 to 1.6, or 1.4 to 1.6, and may be performed such that the ratio (H2/H1) of heat-treatment times (h) is 1.5 to 2.5, 1.5 to 2.3, 1.5 to 2, or 1.5 to 1.8. Accordingly, by applying different heat-treatment temperatures in the coating process (1) and the doping process (2), copper and calcium may be uniformly diffused (diffusion) into the positive electrode active material. When the heat-treatment temperature of the coating process (1) is high, Cu is diffused (diffusion) into the interior before sodiation, and there is a possibility that Ca and Na are difficult to be sodium-inserted into the structure, and thus heat treatment at a higher temperature is required in the doping process (2).

In addition, in the coating process and the doping process, the copper compound and the calcium compound may be mixed such that a molar ratio (Cu/Ca) of copper to calcium is 1.5 to 4.5. Specifically, the copper compound and the calcium compound may be mixed such that the Cu/Ca molar ratio is 1.5 to 4.5, 2 to 4.5, 2.5 to 4, 3 to 4, or 3 to 3.5. When the Cu/Ca molar ratio is less than the lower limit, the effects of improving structural stability and cycle-life characteristics by copper doping are not sufficiently exhibited, or capacity characteristics may deteriorate due to excessive calcium doping. Conversely, when the Cu/Ca molar ratio exceeds the upper limit, the effect of improving the distribution uniformity of copper by calcium becomes insufficient, such that the doped copper is physically agglomerated or readily forms impurity phases through chemical reactions.

The coating process (1) and the doping process (2) may be performed such that the composite transition metal hydroxide precursor and the sodium composite transition metal oxide are each secondary particles in which at least one primary particle is aggregated, and a ratio (D/C) of the average particle diameter (D50) of the sodium composite transition metal oxide secondary particles (D) to the average particle diameter (D50) of the composite transition metal hydroxide precursor secondary particles (C) is 1.2 to 2. Specifically, the ratio (D/C) of the average particle diameters (D50) may be 1.2 to 2, 1.2 to 1.8, or 1.3 to 1.5. Accordingly, the size of the precursor primary particles is increased, copper may be uniformly coated over the entire surfaces of the precursor particles, and, as a result of increasing the reactivity between the transition metal and copper, copper may be uniformly diffused on the surfaces and in the interiors of the oxide particles. In addition, there is an effect of suppressing side reactions with the electrolyte by reducing the specific surface area in contact with the electrolyte.

Subsequently, the method may further include a process of washing with water the positive electrode active material prepared in the doping process. The washing process is a process for removing unreacted materials, impurities, and residual sodium, and may be performed by introducing the positive electrode active material prepared in the calcination process into a reactor containing at least one selected from deionized water, distilled water, and ethanol, and washing the positive electrode active material at a temperature of 1 to 80°C or 5 to 50°C, at a stirring speed of 200 to 500 rpm, 200 to 400 rpm, or 300 to 400 rpm, for 0.5 to 5 hours, 0.5 to 4 hours, 0.5 to 3 hours, or 0.5 to 1.5 hours.

Further, a drying process may be performed to remove moisture from the positive electrode active material containing moisture after the washing process, and the drying process may perform drying under vacuum conditions at a temperature of 100 to 300°C for 12 hours or longer.

Another embodiment of the present invention provides a positive electrode for a sodium secondary battery including the positive electrode active material described above, and a sodium secondary battery.

The positive electrode includes a positive electrode current collector and a positive electrode active material layer disposed on the positive electrode current collector, and the positive electrode active material according to one aspect of the present invention is present in the positive electrode active material layer.

The positive electrode current collector is not particularly limited so long as it has conductivity without causing a chemical change in the battery. For example, stainless steel, aluminum, nickel, titanium, calcined carbon, or aluminum or stainless steel surface-treated with carbon, nickel, titanium, silver, or the like may be used. Further, the positive electrode current collector may generally have a thickness of 3 to 500 µm, and adhesion of the positive electrode active material may also be improved by forming fine irregularities on the surface of the current collector. Such a positive electrode current collector may be provided in various forms such as a film, sheet, foil, net, porous body, foam, or nonwoven fabric.

Further, the positive electrode active material layer may be a layer including the above-described positive electrode active material together with a conductive material and a binder.

Here, the conductive material is used to impart conductivity to the electrode, and any material may be used without particular limitation so long as it has conductivity without causing a chemical change in the positive electrode active material. Non-limiting examples of the conductive material include graphite such as natural graphite or artificial graphite; carbon-based materials such as carbon black, acetylene black, Ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; and conductive polymers such as polyphenylene derivatives. The conductive material may generally be included in an amount of 1 wt% to 30 wt% based on the total weight of the positive electrode active material layer.

Further, the binder is a material that serves to improve adhesion among positive electrode active material particles and adhesion between the positive electrode active material and the current collector. Polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber (SBR), fluororubber, or various copolymers thereof may be given as non-limiting examples of the binder.

The positive electrode according to one embodiment of the present invention may be prepared according to a conventional method for preparing a positive electrode for a sodium secondary battery, except that the above-described positive electrode active material is used. For example, a positive electrode may be prepared by applying a slurry for forming a positive electrode active material layer, including the positive electrode active material and, optionally, a binder and a conductive material, onto a positive electrode current collector, followed by drying and roll pressing. According to another example, a positive electrode may be prepared by casting the slurry for forming a positive electrode active material layer onto a separate support, peeling the positive electrode active material layer from the support to obtain a film, and laminating the obtained film onto a positive electrode current collector.

According to another aspect of the present invention, there is provided an electrochemical device including the above-described positive electrode. Here, the electrochemical device may specifically be a battery, a capacitor, or the like, and more specifically, may be a sodium secondary battery.

The sodium secondary battery includes a positive electrode, a negative electrode disposed opposite to the positive electrode, a separator interposed between the positive electrode and the negative electrode, and an electrolyte (electrolyte solution). In addition, the sodium secondary battery may include a battery container (case) accommodating an electrode assembly including the positive electrode, the negative electrode, and the separator, and a sealing member sealing the battery container.

Depending on the shape of the battery container (case), the sodium secondary battery may be classified into a can-type sodium secondary battery in which the electrode assembly is accommodated in a metal can and a pouch-type sodium secondary battery in which the electrode assembly is accommodated in a pouch made of a sheet such as an aluminum laminate.

In particular, in the case of a pouch-type sodium secondary battery in which a positive electrode including the positive electrode active material according to various embodiments of the present invention is used, there is an advantage in that stability during storage and/or operation is improved while gas generation may be reduced, because the possibility of side reactions between the positive electrode active material and the electrolyte solution is low.

Hereinafter, the present invention is described in detail through Examples, but these are provided for describing the present invention in more detail, and the scope of rights of the present invention is not limited by the following Examples.

### Example

### (Example 1)

### 1) Coating Process

A Ni_{0.33}Fe_{0.33}Mn_{0.33}(OH)₂ precursor and a copper compound, Cu(OH)₂, were mixed using a hand mixer in an amount corresponding to Cu/M (M = Ni+Fe+Mn+Cu) of 0.05 equivalents, and heat-treated at 600°C for 6 hours in an air atmosphere to coat the surface of the precursor with copper.

### 2) Doping Process

To the Cu-coated Ni_{0.33}Fe_{0.33}Mn_{0.33}(OH)₂ precursor, a sodium compound, Na₂CO₃, was added in an amount corresponding to Na/M (M = Ni+Fe+Mn) = 1.0 equivalent, and a calcium compound, Ca(OH)₂, was added in an amount corresponding to Ca/M (M = Ni+Fe+Mn) = 0.015 equivalent, followed by heat treatment at 900°C for 10 hours in an air atmosphere to prepare a positive electrode active material powder (Na_{0.97}Ca_{0.015}[(Ni_{0.29}Fe_{0.33}Mn_{0.33}Cu_{0.05})]O₂ powder).

### 3) Positive Electrode Preparation Process

A positive electrode slurry was prepared by dispersing 85 wt% of the prepared positive electrode active material, 10 wt% of carbon black, and 5 wt% of a PVdF binder in 30 g of N-methyl-2-pyrrolidone (NMP). The positive electrode slurry was uniformly coated onto an aluminum thin film having a thickness of 15 µm and vacuum-dried at 135°C to prepare a positive electrode for a sodium secondary battery.

### 4) Sodium Secondary Battery Preparation Process

Using the positive electrode, a sodium metal plate as a counter electrode, porous glass fiber (thickness: 200 µm) as a separator, and an electrolyte in which NaPF₆ was present at a concentration of 1.0 M in a solvent mixed at a volume ratio of 98:2 of propylene carbonate and fluoroethylene carbonate, a sodium secondary battery (coin cell) was prepared.

### (Comparative Example 1)

A positive electrode active material, a positive electrode, and a sodium secondary battery were prepared in the same manner as in Example 1, except that 1) the coating process was not performed, and 2) the calcium compound was not added in the doping process.

### (Comparative Example 2)

A positive electrode active material, a positive electrode, and a sodium secondary battery were prepared in the same manner as in Example 1, except that 1) the coating process was not performed, and 2) a copper compound, Cu(OH)₂, was added in the doping process instead of the calcium compound in an amount corresponding to Cu/M (M = Ni+Fe+Mn+Cu) of 5.0 equivalents.

### (Comparative Example 3)

A positive electrode active material, a positive electrode, and a sodium secondary battery were prepared in the same manner as in Example 1, except that 1) the coating process was not performed.

### (Comparative Example 4)

A positive electrode active material, a positive electrode, and a sodium secondary battery were prepared in the same manner as in Example 1, except that 1) the coating process was not performed, and 2) in addition to the calcium compound and the sodium compound added in the doping process, a copper compound, Cu(OH)₂, was further added in an amount corresponding to Cu/M (M = Ni+Fe+Mn+Cu) of 5.0 equivalents.

### Experimental Example

### Experimental Example 1: SEM-EDS (Scanning Electron Microscopy and Energy Dispersive X-ray Spectroscopy) Mapping Analysis

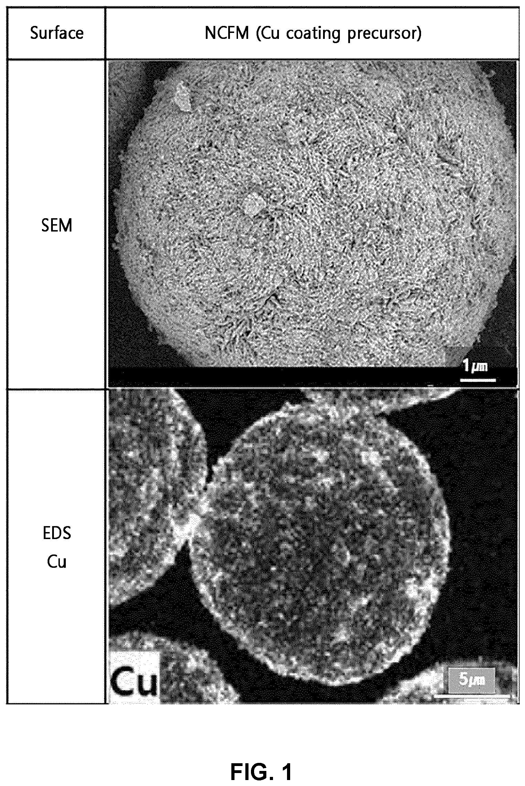

SEM-EDS (Scanning Electron Microscopy and Energy Dispersive X-ray Spectroscopy) mapping analysis was performed on the surface of the copper-coated precursor particles prepared in Example 1, and the results are shown in FIG. 1.

Referring to FIG. 1, it could be confirmed that Cu was uniformly distributed on the precursor surface.

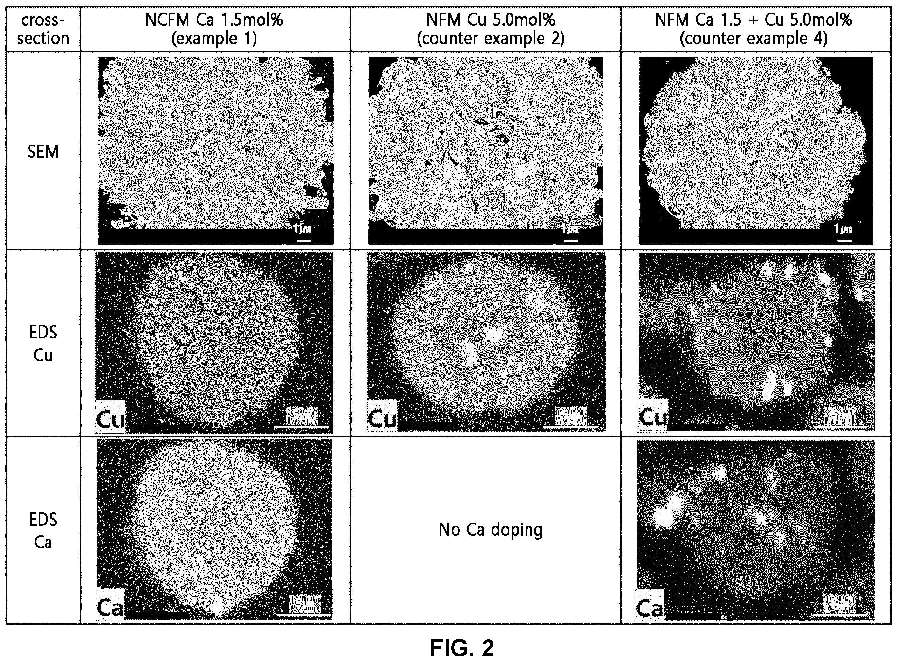

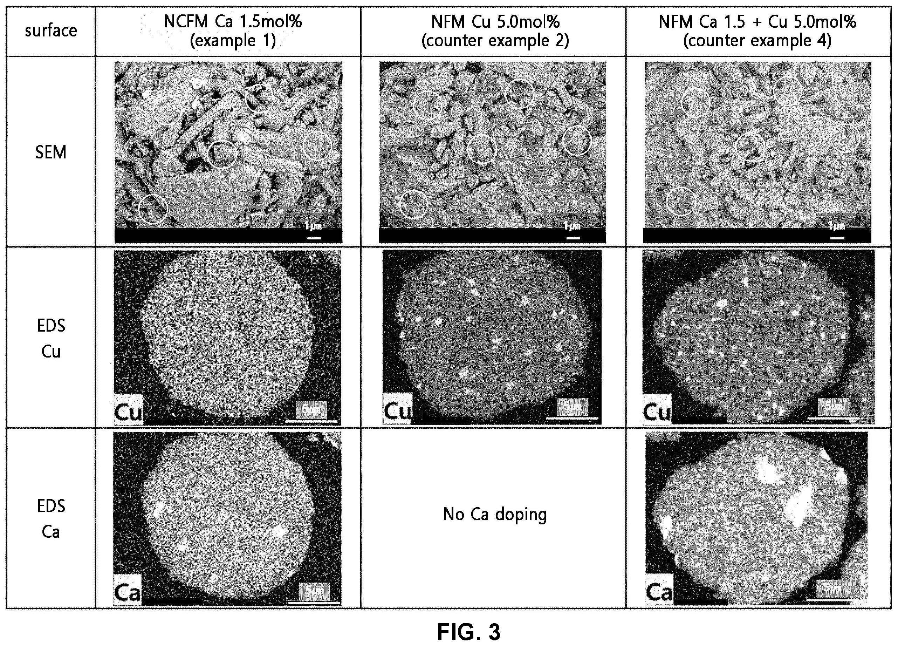

SEM-EDS (Scanning Electron Microscopy and Energy Dispersive X-ray Spectroscopy) mapping analysis was performed on the cross-sections/surfaces of the positive electrode active material particles prepared in Example 1 and Comparative Examples 2 and 4, and the results are shown in FIGS. 2 and 3.

In addition, five circular regions each having a diameter corresponding to approximately 1/8 of the particle diameter were randomly selected without overlap on the particle surface and cross-section, respectively (see the yellow circles in the SEM image of FIG. 2), and then the compositions of Cu and Ca were quantified by SEM-EDS analysis, and the area ratios (A1/At, A2/At, B1/Bt, B2/Bt, %) of Relation Formulas 1A, 1B, 2A, and 2B were calculated.

Subsequently, of the selected total cross-sectional area (At), the area (A1) of a region in which copper was within ±10% of the average content with respect to 100 at mol% of total metals excluding sodium and calcium (a region having 5±0.5 at mol%), and the area (A2) of a region in which calcium was within ±10% of the average content with respect to 100 at mol% of the total amount of sodium and calcium (a region having 1.5±0.15 at mol%), were calculated as percentages (%) as in Relation Formulas 1A and 2A. The calculation results were shown in Table 1 below.

In addition, of the selected total surface area (Bt), the area (B1) of a region in which copper is within ±10% of the average content with respect to 100 at mol% of total metals excluding sodium and calcium (a region having 5±0.5 at mol%), and the area (B2) of a region in which calcium is within ±10% of the average content with respect to 100 at mol% of the total amount of sodium and calcium (a region having 1.5±0.15 at mol%), were calculated as percentages (%) as in Relation Formulas 1B and 2B. The calculation results were shown in Table 1 below.

**[Table 1]**

| | Positive Electrode Active Material Particle Cross-Section | | Positive Electrode Active Material Particle Surface | |
|---|---|---|---|---|
| | Relation Formula 1A A1(Cu)/At (%) | Relation Formula 2A A2(Ca)/At (%) | Relation Formula 1B B1(Cu)/Bt (%) | Relation Formula 2B B2(Ca)/Bt (%) |
| Example 1 | 99 | 99 | 99 | 98 |
| Comparative Example 2 | 84 | - | 87 | - |
| Comparative Example 4 | 79 | 78 | 85 | 75 |

Referring to Table 1 and FIGS. 2 and 3, it could be confirmed that, in Example 1, when Ca doping and Na insertion were performed using the NFM precursor having Cu uniformly coated on the surface, Ca and Cu diffused into the surfaces and interiors of the positive electrode active material particles and were uniformly distributed.

In addition, referring to the surface SEM images and cross-sectional SEM images, it could be confirmed that the size of the primary particles increased, thereby decreasing the specific surface area and internal pores.

In contrast, in Comparative Examples 2 and 4, it could be confirmed that the doping uniformity of Cu was poor on the surfaces and in the interiors of the positive electrode active material particles, and that the size of the primary particles was also smaller than that in Example 1.

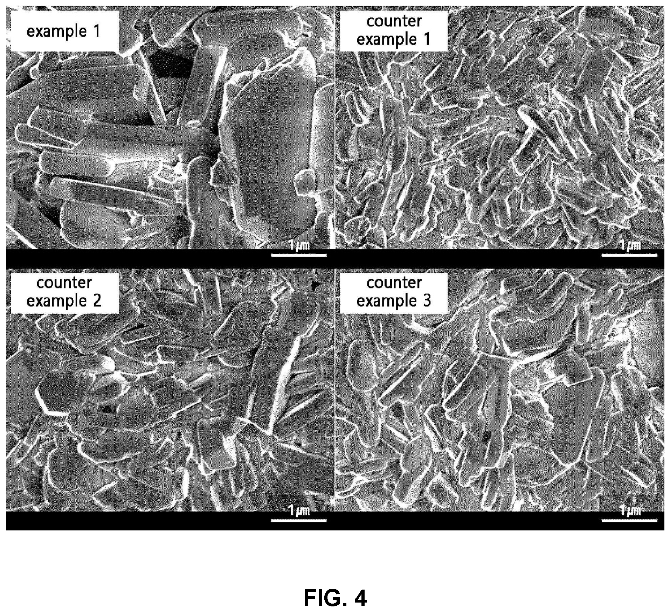

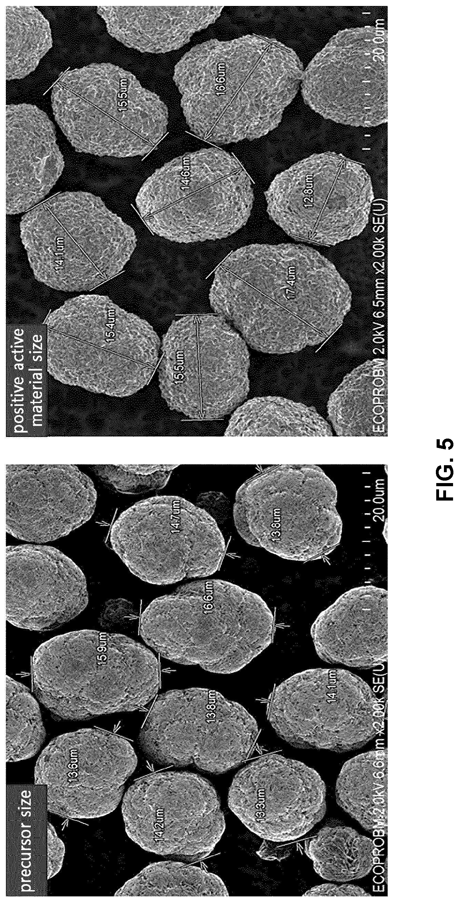

SEM images of the primary particles of the positive electrode active materials and SEM images of the secondary particles of the positive electrode active materials prepared in Example 1 and Comparative Examples 1 to 3 were shown in FIGS. 4 and 5, respectively.

As shown in FIG. 4, compared with Comparative Example 1 in which no metal doping was performed, the size of the primary particles slightly increased in Comparative Examples 2 and 3 doped with Ca alone or Cu alone, whereas the size of the primary particles increased to the greatest extent in Example 1. These results are analyzed to result from the combined effect of Ca and Cu.

In addition, as shown in FIG. 5, it was confirmed that precursor secondary particles having an average particle diameter (D50) of 9.0 to 16.7 µm were prepared into positive electrode active material secondary particles having an average particle diameter (D50) increased to 12.0 to 18.5 µm. These results are analyzed to result from Ca and Cu dual doping, as with the increase in the size of the primary particles shown in FIG. 4.

Taken together, it is expected that the average particle diameters of the primary particles and secondary particles increase and the specific surface area decreases, thereby reducing the area reacting with the electrolyte, increasing energy density, and improving cycle-life characteristics.

### Experimental Example 2: XRD ((X-ray diffraction) and SAED (Selected area electron diffraction) Analysis

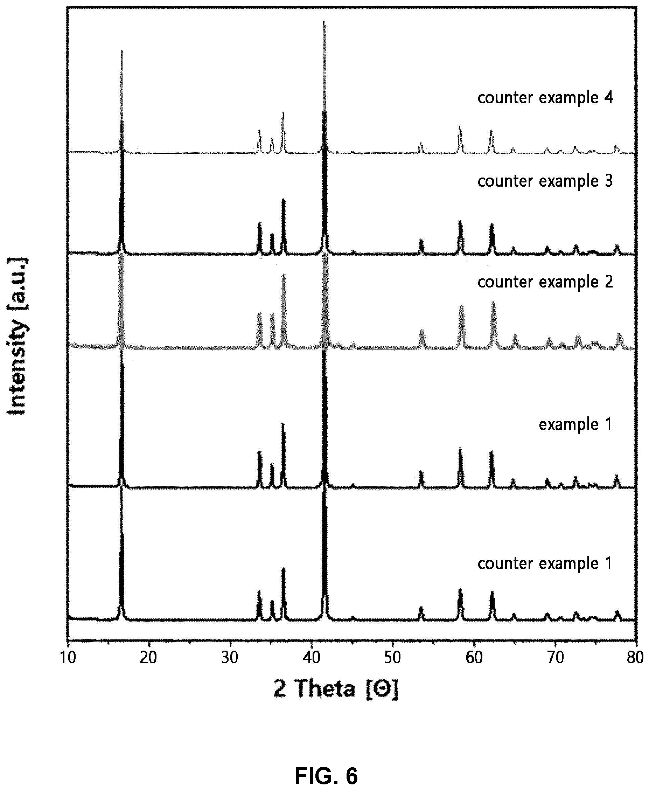

The XRD analysis results of the positive electrode active materials prepared in Example 1 and Comparative Examples 1 to 4 were shown in FIG. 6, and the (003) peak full width at half maximum FWHM(003), c-lattice length, and NiO ratio obtained through the XRD analysis were organized and shown in Table 2 below.

**[Table 2]**

| | Example 1 | Comparative Example 1 | Comparative Example 2 | Comparative Example 3 | Comparative Example 4 |
|---|---|---|---|---|---|
| Doping Element | Ca, Cu | - | Cu | Ca | Ca, Cu |
| c-axis Length (Å) | 16.004 | 16.000 | 16.007 | 15.995 | 16.005 |
| NiO Content (%) | - | - | 0.43 | - | 0.07 |

As shown in FIG. 6 and Table 2, the c-axis length increased in Example 1 and Comparative Examples 2 and 4, and these results are analyzed to be attributable to expansion of the interlayer spacing through Cu doping. However, referring to Comparative Example 3, it could be seen that Ca doping did not contribute to expansion of the interlayer spacing.

Considering that Example 1 exhibited an accurate peak position and the highest peak intensity, it was confirmed that O3 crystallinity was improved compared with Comparative Examples 2 and 4. In addition, other peaks such as an impurity phase or a second phase were not observed. This is analyzed to be advantageous for improving electrochemical performance because generation of a NiO peak is suppressed during Ca doping and Na insertion by using the Cu-coated NFM precursor.

In contrast, impurity peaks and NiO peaks were observed in Comparative Example 2, and some NiO peaks were also observed in Comparative Example 4. Referring to Table 1 and FIGS. 1 and 2, it could be confirmed that, because the distribution uniformity of the Cu composition was poor, the effects of Cu and Ca dual doping were not sufficiently exhibited in Comparative Example 4 compared with Example 1, as in Comparative Example 2 in which Cu alone was doped.

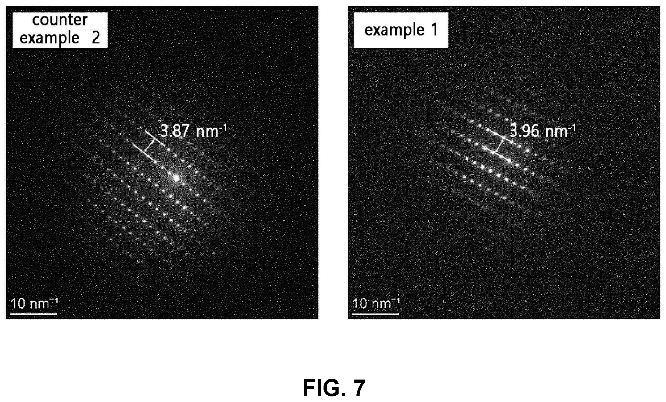

FIG. 7 shows the SEAD analysis results of the positive electrode active materials prepared in Example 1 and Comparative Example 2, and it was confirmed that the transition metal layer spacing in Example 1 significantly increased to 3.96 nm⁻¹ compared with 3.87 nm⁻¹ in Comparative Example 1.

Taken together, in Example 1, both the c-lattice length and the transition metal layer spacing increased due to expansion of the interlayer spacing by Cu doping, and, as the doping uniformity of Cu and Ca dual doping improved, impurity phases such as NiO were not generated and O3 crystallinity increased, and as a result, improvement in the Na-ion diffusion rate and improvement in initial cycle capacity are predicted.

### Experimental Example 3: Battery Performance Evaluation

With respect to the sodium secondary batteries prepared in Example 1 and Comparative Examples 1 to 4, a charge/discharge test was conducted using an electrochemical analysis system (Toyo, Toscat-3100) at 25°C, within a voltage range of 2.5 V to 4.3 V, under conditions of 0.1 C/0.1 C, and the 1st charge capacity, 1st discharge capacity, and 1st reversible efficiency were measured.

In addition, with respect to the same sodium secondary batteries, charge/discharge cycling was performed 50 times at 25°C within an operating voltage range of 2.5 V to 4.3 V under conditions of 1 C/1 C, and the ratio of the discharge capacity at the 50th cycle to the initial discharge capacity (cycle capacity retention (capacity retention)) was measured, and the results are shown in Table 3 below.

**[Table 3]**

| | Example 1 | Comparative Example 1 | Comparative Example 2 | Comparative Example 3 | Comparative Example 4 |
|---|---|---|---|---|---|
| 1st CH (mAh/g) | 157.5 | 156.6 | 157.1 | 158.8 | 157.1 |
| 1st DCH (mAh/g) | 143.6 | 144.5 | 143.3 | 144.6 | 143.3 |
| ICE (%) | 91.2 | 92.3 | 91.2 | 91.1 | 91.2 |
| 1 Cycle DCH (mAh/g) | 135.9 | 133.6 | 137.6 | 134.0 | 134.8 |
| 50 Cycle DCH (mAh/g) | 123.4 | 111.8 | 122.0 | 116.5 | 120.0 |
| 50 Cycle retention (%) | 90.9 | 83.2 | 88.7 | 87.0 | 89.0 |

Referring to Table 3, Example 1 exhibited the best result, with a 50-cycle life retention of 90% or more.

It is confirmed that Comparative Examples 1 to 4 exhibit deterioration in electrochemical performance, such as reductions in both the 50-cycle life retention and the discharge capacity compared with Example 1.

### Experimental Example 4: Measurement of Residual Na Content (ppm) and Moisture Stability Test

With the positive electrode active materials prepared in Example 1 and Comparative Examples 1 to 4 exposed for 1 to 14 days in a humidity chamber having a humidity of 60%, residual Na content measurement and moisture stability tests were conducted.

The content of residual sodium was taken as a value (TTS, Total Sodium) obtained by measuring each compound containing residual Na (for example, NaOH or Na₂CO₃) by potentiometric neutralization titration and then separately calculating the total amount of Na. The calculation method is as shown in Calculation Formula 1 below. [Calculation Formula 1] 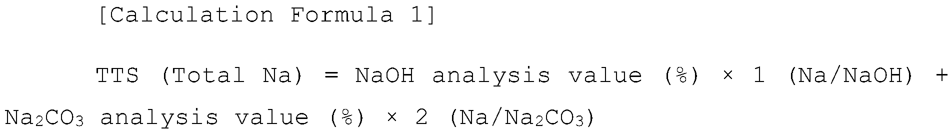 TTS (Total Na) = NaOH analysis value (%) × 1 (Na/NaOH) + Na2CO3 analysis value (%) × 2 (Na/Na2CO3)

The moisture content was measured by placing a sample in a vial dedicated to a KF Oven (Karl Fischer Oven), heating the sample to vaporize the moisture contained therein, and transferring the vaporized moisture to a measurement vessel using a flow gas (air or N₂).

**[Table 4]**

| residual Na(ppm) | 1 day | 2 days | 3 days | 4 days | 5 days | 6 days | 7 days | 14 days |
|---|---|---|---|---|---|---|---|---|
| Comparative Example 1 | 4,512 | 9,381 | 12,662 | 14,327 | 17,017 | 18,438 | 28,312 | 42,333 |
| Comparative Example 2 | 4,807 | 8,303 | 11,181 | 13,596 | 15,299 | 16,391 | 22,421 | 36,391 |
| Comparative Example 3 | 2,495 | 3,905 | 5,007 | 5,989 | 6,791 | 7,550 | 8,500 | 11,046 |
| Example 1 | 3,608 | 4,097 | 4,906 | 5,631 | 6,003 | 6,837 | 7,258 | 8,628 |

**[Table 5]**

| moisture (ppm) | 1 day | 2 days | 3 days | 4 days | 5 days | 6 days | 7 days | 14 days |
|---|---|---|---|---|---|---|---|---|
| Comparative Example 1 | 102.3 | 471.6 | 597.1 | 675.3 | 735.6 | 754.7 | 806.8 | 3473.6 |
| Comparative Example 2 | 59.6 | 411.2 | 487.9 | 590.9 | 655.0 | 693.4 | 700.1 | 2239.6 |
| Comparative Example 3 | 51 | 305.5 | 390.6 | 451.1 | 491.9 | 551.0 | 581.6 | 607.6 |
| Example 1 | 73.5 | 348.8 | 390.5 | 440.3 | 480.3 | 500.2 | 528.8 | 575.3 |

As shown in Tables 4 and 5, moisture stability was found to be superior in the order of Example 1, Comparative Example 3, Comparative Example 2, and Comparative Example 1. In the case of Example 1, moisture stability was improved due to the effect of reducing residual Na, and the effect was maintained even after long-term exposure in the humidity chamber. This is analyzed to be due to improvements in structural stability and moisture stability according to Ca and Cu dual doping and improvement in doping uniformity.

### Experimental Example 5: Review of Optimization of Ca and Cu Dual-Doping Contents

### (Examples 1-1 to 1-5)

Positive electrode active materials, positive electrodes, and sodium secondary batteries were prepared in the same manner as in Example 1, except that the doping metal precursors were used in the compositions shown in Table 6 below.

A1(Cu)/At (%) of [Relation Formula 1A] was calculated in the same manner as in Experimental Example 1, and the results are shown in Table 6 below.

In addition, cycle-life characteristics were calculated in the same manner as in Experimental Example 3, and the results are shown in Table 6 below.

**[Table 6]**

| | Type and Content of Doping Metals [M1/M2=(mol%/mol%)] | Cu Distribution in Particle Cross-Section [Relation Formula 1A] A1 (Cu)/At (%) | Cycle Life (50 Cy, %) |
|---|---|---|---|
| Example 1 | Cu/Ca = 5.0/1.5 | 99 | 90.9 |
| Example 1-1 | Cu/Ca = 3.0/1.5 | 91 | 87.8 |
| Example 1-2 | Cu/Ca = 1.0/1.5 | 82 | 87.0 |
| Example 1-3 | Cu/Ca = 5.0/1.0 | 95 | 89.2 |
| Example 1-4 | Cu/Ca = 5.0/0.5 | 93.5 | 88.9 |
| Example 1-5 | Cu/Ca = 1.5/0.5 | 85 | 87.1 |

Referring to Table 6, it is analyzed that, in Examples 1, 1-1, and 1-2, as the Cu doping amount decreases, the effect of improving structural stability is insignificant, and thus cycle-life characteristics deteriorate.

In addition, it is analyzed that, in Examples 1, 1-3, and 1-4, as the Ca doping amount decreases, the distribution uniformity of Cu into the interiors of the positive electrode active material particles deteriorates, and thus cycle-life characteristics deteriorate.

In addition, it is analyzed that, as in Example 1-5, even when the Cu/Ca molar ratio falls within the preferred range of the present invention, if the contents of Cu and Ca are excessively low, the effects resulting from introduction of the dual doping metals are insignificant, and thus structural stability and cycle life deteriorate.

## Claims

1. A positive electrode active material for a sodium secondary battery, comprising a sodium composite transition metal oxide including at least sodium, nickel, manganese, M1, and doping metals, wherein M1 is iron or cobalt, wherein the doping metals consist of calcium and copper, and wherein the positive electrode active material satisfies the following Relation Formula 1A: [Relation Formula 1A] $80 \leq A 1 \left(Cu\right) / At \left(%\right) \leq 99$
wherein, in Relation Formula 1A,
At is the total cross-sectional area of particles of the sodium composite transition metal oxide, and
A1(Cu) is an area, among the total cross-sectional area, in which copper is within ±10% of the average content (Cu, average at mol%) based on 100 at mol% of total metals excluding sodium and calcium.

2. The positive electrode active material for a sodium secondary battery according to claim 1,
satisfying the following Relation Formula 1B: [Relation Formula 1B] $80 \leq B 1 \left(Cu\right) / Bt \left(%\right) \leq 99$
wherein, in Relation Formula 1B,
Bt is the total surface area of particles of the sodium composite transition metal oxide, and
B1(Cu) is an area, among the total surface area, in which copper is within ±10% of the average content (Cu, average at mol%) based on 100 at mol% of total metals excluding sodium and calcium.

3. The positive electrode active material for a sodium secondary battery according to claim 1,
satisfying the following Relation Formula 2A: [Relation Formula 2A] $80 \leq A 2 \left(Ca\right) / At \left(%\right) \leq 99$
wherein, in Relation Formula 2A,
At is the total cross-sectional area of particles of the sodium composite transition metal oxide, and
A2(Ca) is an area, among the total cross-sectional area, in which calcium is within ±10% of the average content (Ca, average at mol%) based on 100 at mol% of the total amount of sodium and calcium.

4. The positive electrode active material for a sodium secondary battery according to claim 1,
satisfying the following Relation Formula 2B: [Relation Formula 2B] $80 \leq B 2 \left(Ca\right) / Bt \left(%\right) \leq 99$
wherein, in Relation Formula 2B,
Bt is the total surface area of particles of the sodium composite transition metal oxide, and
B2(Ca) is an area, among the total surface area, in which calcium is within ±10% of the average content (Ca, average at mol%) based on 100 at mol% of the total amount of sodium and calcium.

5. The positive electrode active material for a sodium secondary battery according to claim 1,
wherein the sodium composite transition metal oxide includes the doping metals such that a molar ratio (Cu/Ca) of copper to calcium is from 1.5 to 4.5.

6. The positive electrode active material for a sodium secondary battery according to claim 1,
wherein the sodium composite transition metal oxide includes copper in an amount greater than 3 at mol% and less than 10 at mol% based on 100 at mol% of total metals excluding sodium and calcium, and
calcium in an amount greater than 0.5 at mol% and less than 3 at mol% based on 100 at mol% of a total amount of sodium and calcium.

7. The positive electrode active material for a sodium secondary battery according to claim 1,
wherein the sodium composite transition metal oxide includes a compound represented by Chemical Formula 1-1:
[Chemical Formula 1-1] Naₐ₋₂ᵥCaᵥ[(NiₓMn_{y}M1_{z}Cu_{w})]O₂
wherein, in Chemical Formula 1-1,
M1 is Co or Fe,
0.8<a<1.2, 0.005<v<0.03, 0.1≤x≤0.9, 0.1≤y≤0.9, 0.1≤z≤0.9, 0.03<w<0.1, and x+y+z+w=1.

8. The positive electrode active material for a sodium secondary battery according to claim 1,
wherein the sodium composite transition metal oxide includes a compound represented by Chemical Formula 1-2:
[Chemical Formula 1-2] Naₐ₋₂ᵥCaᵥ[(NiₓMn_{y}M1_{z}Cu_{w})]O₂
wherein, in Chemical Formula 1-2,
M1 is Fe,
0.9<a<1.1, 0.01<v<0.02, 0.27≤x≤0.37, 0.27≤y≤0.37, 0.27≤z≤0.37, 0.04<w<0.06, and x+y+z+w=1.

9. The positive electrode active material for a sodium secondary battery according to claim 1,
wherein, in the sodium composite transition metal oxide, the calcium is substituted into a sodium layer of the composite transition metal oxide, and the copper is substituted into a transition metal layer of the composite transition metal oxide.

10. The positive electrode active material for a sodium secondary battery according to claim 1,
wherein the sodium composite transition metal oxide has an O3 crystal structure in X-ray diffraction analysis,
a full width at half maximum (FWHM) of a (003) peak located at 2θ=15 to 17.5° is 0.1699 to 0.2599, and
an NiO peak does not substantially appear.

11. A method of preparing a positive electrode active material for a sodium secondary battery, the method comprising:
a coating process of mixing a composite transition metal hydroxide precursor including at least nickel, manganese, and M1 (Co and/or Fe) with a copper compound and performing a first heat treatment to coat at least a portion of a surface of particles of the composite transition metal hydroxide precursor with copper; and
a doping process of mixing the copper-coated transition metal hydroxide precursor with a calcium compound and a sodium compound and performing a second heat treatment to substitute surfaces and interiors of particles of a sodium composite transition metal oxide with copper and calcium.

12. The method of preparing a positive electrode active material for a secondary battery according to claim 11,
wherein, in the coating process (1) and the doping process (2), a ratio (T2/T1) of heat treatment temperatures (°C) is from 1.2 to 2, and a ratio (H2/H1) of heat treatment times (h) is from 1.5 to 2.5.

13. The method of preparing a positive electrode active material for a secondary battery according to claim 11,
wherein, in the coating process and the doping process, the copper compound and the calcium compound are mixed such that a molar ratio (Cu/Ca) of copper to calcium is from 1.5 to 4.

14. The method of preparing a positive electrode active material for a secondary battery according to claim 11,
wherein the coating process (1) and the doping process (2) are performed such that
the composite transition metal hydroxide precursor and the sodium composite transition metal oxide are each secondary particles in which at least one primary particle is aggregated, and
a ratio (D/C) of an average particle diameter (D50) of secondary particles (D) of the sodium composite transition metal oxide to an average particle diameter (D50) of secondary particles (C) of the composite transition metal hydroxide precursor is from 1.2 to 2.

15. A positive electrode for a sodium secondary battery, comprising the positive electrode active material according to claim 1.

16. A sodium secondary battery comprising:
the positive electrode according to claim 15; and a negative electrode.
